# NEUE EUROPÄISCHE PATENTSCHRIFT

(11) **EP 3 127 725 B2**
(45) Veröffentlichungstag und Bekanntmachung des Hinweises auf die Entscheidung über den Einspruch: **03.01.2024**
(45) Hinweis auf die Patenterteilung: 07.10.2020
(21) Anmeldenummer: 16180963.7
(22) Anmeldetag: 25.07.2016
(51) Int. Cl.: B60D 1/06, B60D 1/62

(54) **ANHÄNGEKUPPLUNG**
TRAILER COUPLING
ATTELAGE

(30) Priorität: 03.08.2015 DE 102015112741
(43) Veröffentlichungstag der Anmeldung: 08.02.2017
(73) Patentinhaber: ACPS Automotive GmbH, 74379 Ingersheim (DE)
(72) Erfinder: Burkhardt, Volker, 71696 Möglingen (DE); Gentner, Wolfgang, 71711 Steinheim (DE); Noatsch, Bernd, 71069 Sindelfingen (DE)
(74) Vertreter: Hoeger, Stellrecht & Partner Patentanwälte mbB

(56) Entgegenhaltungen:
- EP-A1- 2 567 837
- EP-A1- 2 567 837
- EP-A1- 2 952 367
- WO-A1-2015/185358
- DE-A1-102010 029 414
- DE-A1-102010 045 519
- DE-A1-102010 045 519
- DE-A1-102012 001 921
- DE-A1-102014 107 967
- DE-A1-102014 108 071
- DE-U1-202013 000 779
- GB-A- 465 020
- US-A- 5 159 312

## Beschreibung

Die Erfindung betrifft eine Anhängekupplung für Kraftfahrzeuge, insbesondere Personenkraftfahrzeuge, umfassend einen Kugelhals, der an einem ersten Ende einen Kugelansatz und eine durch den Kugelansatz gehaltene Kupplungskugel trägt, eine an einer Heckseite und einer Fahrzeugkarosserie fahrzeugfest montierbare Trägereinheit, eine an der Trägereinheit angeordnete Lagereinheit, mittels welcher der Kugelhals mit einem zweiten Ende an der Trägereinheit zwischen einer Arbeitsstellung und einer Ruhestellung bewegbar gelagert ist, und eine in der Kupplungskugel angeordnete Sensoreinheit, zu welcher eine elektrische Leitung geführt ist, die zumindest abschnittsweise in einem den Kugelansatz und den Kugelhals teilweise durchsetzenden Kanal geführt ist, welcher von einem Inneren der Kupplungskugel durch den Kugelansatz hindurch bis zu einem Ausgang am Kugelhals verläuft.

Derartige Anhängekupplungen sind aus dem Stand der Technik bekannt. Das Dokument DE 20 2013 000779 U1 offenbart eine Anhängekupplung gemäß dem Oberbegriff des Anspruchs 1.

Bei diesem besteht das Problem, einerseits den Kanal ausreichend groß zu gestalten, ohne die Stabilität des Kugelhalses zu reduzieren und andererseits den Kanal günstig aus dem Kugelhals herauszuführen.

Diese Aufgabe wird bei einer Anhängekupplung der eingangs beschriebenen Art erfindungsgemäß dadurch gelöst, dass der Kanal schräg zu einer Kupplungskugelmittelachse verläuft, im Innern der Kupplungskugel die Kupplungskugelmittelachse schneidet und zu einer im Abstand von der Kupplungskugelmittelachse endenden, von einer Außenkontur des Kugelhalses in diesen eindringenden Vertiefung im Kugelhals verläuft, in welcher der Ausgang liegt.

Der Vorteil der erfindungsgemäßen Lösung ist einerseits darin zu sehen, dass durch den schrägen Verlauf des Kanals einerseits dieser in einfacher Weise so geführt werden kann, dass der Ausgang an einer günstigen Stelle des Kugelhalses liegt und andererseits durch die Eintiefung, die sich allerdings nicht bis zur Kupplungskugelmittelachse erstreckt, die Möglichkeit zu haben, den Ausgang in der Eintiefung anzuordnen und dadurch über die Eintiefung die elektrische Leitung herauszuführen.

Dabei ist unter der Kupplungskugelmittelachse die Mittelachse zu verstehen, zu welcher sowohl die Kupplungskugel als auch der Kugelansatz rotationssymmetrisch verlaufen.

Eine herstellungstechnisch besonders günstige Lösung sieht jedoch vor, dass der Kanal ausgehend von dem Innern der Kupplungskugel kreuzungsfrei und mit zunehmendem Abstand von der Kupplungskugelmittelachse, vorzugsweise geradlinig, verläuft.

Um den Kanal herstellungstechnisch günstig zu gestalten, ist erfindungsgemäß vorgesehen, dass der Kanal eine sich von einer dem Kugelansatz gegenüberliegenden Seite in die Kupplungskugel hineinerstreckende, insbesondere zur Kupplungskugelmittelachse koaxiale Ausnehmung aufweist und dass sich der Kanal ausgehend von der Ausnehmung schräg zur Kupplungsmittelachse bis zur Eintiefung fortsetzt.

Besonders günstig ist es, wenn der Kanal eine zu einer Kanalachse koaxiale Kanalbohrung aufweist, die schräg zur Kupplungskugelmittelachse verläuft und insbesondere die Kupplungskugelmittelachse im Innern der Kupplungskugel schneidet, wobei durch die Kanalachse insbesondere ein geradliniger Verlauf dieses Abschnitts des Kanals vorgegeben ist.

Vorzugsweise erstreckt sich die Kanalbohrung in Fortsetzung der zur Kupplungskugelmittelachse koaxialen Ausnehmung, wobei insbesondere die Ausnehmung aufgrund ihres größeren Durchmesser über eine Stufe in die Kanalbohrung übergeht.

Prinzipiell wäre es denkbar, dass der Kanal in der Längsmittelebene des Kugelhalses verläuft und somit entweder auf einer der Fahrzeugkarosserie abgewandten oder zugewandten Seite der Kupplungskugelmittelachse angeordnet ist.

Eine besonders günstige Lösung sieht vor, dass der Kanal schräg zu einer durch die Kupplungskugelachse verlaufenden Längsmittelebene des Kugelhalses verläuft.

Insbesondere ist es günstig, wenn die Kanalachse schräg zu der Längsmittelebene des Kugelhalses verläuft und die Längsmittelebene im Innern der Kupplungskugel schneidet.

Unter einer Längsmittelebene des Kugelhalses ist die Ebene zu verstehen, die durch die Kupplungskugelmittelachse verläuft und in der Arbeitsstellung des Kugelhalses mit der Fahrzeuglängsmittelebene zusammenfällt, also in der Arbeitsstellung in Richtung der Fahrzeuglängsrichtung und vertikal verläuft.

In diesem Fall liegt somit der Kanal auf einer Seite der Längsmittelebene, so dass der Ausgang des Kanals ebenfalls auf einer Seite der Längsmittelebene angeordnet ist.

Eine derartige Anordnung des Ausgangs des Kanals ermöglicht es, die elektrische Leitung günstig zu führen, insbesondere so zu führen, dass die Wahrscheinlichkeit einer Beschädigung derselben möglichst gering ist.

Hinsichtlich der Lage der Eintiefung wurden keine weiteren spezifischen Angaben gemacht.

So könnte die Eintiefung sich von einer quer zu einer Längsseite des Kugelhalses verlaufenden Seite in diesen hineinerstrecken.

Um das Kabel ausgehend von dem Ausgang von einer günstig gelegenen Stelle am Kugelhals weiterführen zu können, ist vorzugsweise vorgesehen, dass die Eintiefung sich ausgehend von einer Längsseitenkontur des Kugelhals in den Kugelhals hineinerstreckt, also ebenfalls auf einer Seite der Längsmittelebene liegt und sich von der auf dieser Seite der Längsmittelebene liegenden Längsseitenkontur in Richtung der Längsmittelebene in den Kugelhals hineinerstreckt.

Hinsichtlich des Verlaufs der Kanalachse im Bereich der Eintiefung wurden bislang keine näheren Angaben gemacht.

So sieht eine vorteilhafte Lösung vor, dass die Kanalachse die Eintiefung nahe eines Eintiefungsbodens schneidet.

Eine andere vorteilhafte Lösung sieht vor, dass die Kanalachse den Eintiefungsboden schneidet, also nicht im Abstand von diesem verläuft.

Ferner ist vorzugsweise vorgesehen, dass der Kanal eine Eintiefungsseitenwand durchdringt, also der Ausgang nicht ausschließlich in dem Eintiefungsboden angeordnet ist, sondern der Ausgang die Eintiefungsseitenwand erfasst.

Eine besonders günstige Lösung sieht vor, dass der Ausgang des Kanals sowohl eine Eintiefungsseitenwand als auch den Eintiefungsboden der Eintiefung durchsetzt, so dass dadurch einerseits der Kanal möglichst nahe an der Kupplungskugelmittelachse oder der Längsmittelebene des Kugelhalses verlaufen kann, andererseits aber die Möglichkeit besteht, in einfacher Weise die elektrische Leitung aus dem Ausgang heraus in die Eintiefung zu führen.

Hinsichtlich des Abstandes des Eintiefungsbodens von der Längsmittelebene wurden bislang keine näheren Angaben gemacht.

Im Rahmen der bisherigen Definition der Lage des Eintiefungsbodens kann dieser in einem geringen Abstand von der Längsmittelebene liegen.

Eine besonders günstige Lösung sieht vor, dass der Eintiefungsboden einen Abstand von der Längsmittelebene aufweist, der größer ist als ein Zehntel oder vorzugsweise größer ist als zwei Zehntel eines Radius der Kupplungskugel.

Damit ist auch gleichzeitig die mindestens notwendige Schräge für den Verlauf des Kanals relativ zur Kupplungskugelachse oder zur Längsmittelebene vorgegeben.

Hinsichtlich der Ausbildung des Kugelhalses im Besonderen wurden bislang keine näheren Angaben gemacht.

Eine vorteilhafte Lösung sieht vor, dass der Kugelhals einen sich ausgehend von dem Kugelansatz in Richtung der Kupplungskugelmittelachse verlaufenden ersten Kugelhalsabschnitt aufweist.

Das heißt, dass dieser Kugelhalsabschnitt zumindest in einem Teilbereich um die zur Kupplungskugelmittelachse herum verläuft, insbesondere zumindest abschnittsweise symmetrisch zu dieser ausgebildet ist.

Die erfindungsgemäße Lösung sieht insbesondere vor, dass in diesem Fall die den Ausgang aufnehmende Eintiefung in dem ersten Kugelhalsabschnitt angeordnet ist.

In diesem Fall ist insbesondere vorgesehen, dass sich die Eintiefung von einer Längsseitenkontur des ersten Kugelhalsabschnitts in Richtung auf die Längsmittelebene zu in den Kugelhals hinein erstreckt, wobei der Eintiefungsboden im Abstand von der Längsmittelebene des Kugelhalses verläuft.

Hinsichtlich der Ausbildung des Kugelhalses ist vorzugsweise vorgesehen, dass der Kugelhals einen sich an den ersten Kugelhalsabschnitt anschließenden und gebogen zur Kupplungskugelmittelachse verlaufenden zweiten Kugelhalsabschnitt aufweist, der sich in der Arbeitsstellung insbesondere in Richtung des Heckbereichs der Kraftfahrzeugkarosserie erstreckt.

Ferner ist vorzugsweise vorgesehen, dass sich an die Eintiefung im ersten Kugelhalsabschnitt eine weitere Eintiefung im zweiten Kugelhalsabschnitt anschließt, die die Möglichkeit eröffnet, die elektrische Leitung in der Eintiefung des ersten Kugelhalsabschnittes und der Eintiefung des zweiten Kugelhalsabschnittes bis zur Kontakteinheit zu führen.

Das Vorsehen derartiger Eintiefungen sowohl im ersten Kugelhalsabschnitt als auch im zweiten Kugelhalsabschnitt erlaubt es, die elektrische Leitung möglichst geschützt von dem Ausgang des Kanals bis zu der Kontakteinheit zu führen.

Ferner ist vorzugsweise vorgesehen, dass der Kugelhals einen sich an den zweiten Kugelhals anschließenden, eine Kontakteinheit tragenden dritten Kugelhalsabschnitt aufweist.

Die Kontakteinheit kann dabei an dem dritten Kugelhalsabschnitt in unterschiedlichster Art und Weise angeordnet sein.

Beispielsweise kann die Kontakteinheit auf dem dritten Kugelhalsabschnitt aufgesetzt sein, wobei der dritte Kugelhalsabschnitt beispielsweise mit einem Montageflansch zur Montage der Kontakteinheit versehen ist.

Eine besonders günstige Lösung sieht vor, dass der dritte Kugelhalsabschnitt eine in diesen eingeformte Aufnahme für die Kontakteinheit aufweist.

Eine derartige Aufnahme ist vorzugsweise ein Durchbruch durch den Kugelhalsabschnitt, wobei der dritte Kugelhalsabschnitt vorzugsweise einen den Durchbruch umgebenden Ringkörper umfasst.

Weiterhin sieht eine vorteilhafte Lösung vor, dass der Kugelhals einen sich an den dritten Kugelhalsabschnitt anschließenden und in ein Element der Lagereinheit übergehenden vierten Kugelhalsabschnitt aufweist.

Der vierte Kugelhalsabschnitt verläuft dabei vorzugsweise so, dass dieser in der Arbeitsstellung unter der Stoßfängerunterkante der Stoßfängereinheit zur Lagereinheit hin verläuft.

Ferner ist vorzugsweise auch im vierten Kugelhalsabschnitt noch eine Eintiefung vorgesehen, die sich ausgehend von der Aufnahme für die Kontakteinheit in Richtung der Lagereinheit erstreckt.

Auch eine derartige Eintiefung erlaubt es, die elektrische Leitung möglichst geschickt von der Kontakteinheit weiter in Richtung des Heckbereichs der Kraftfahrzeugkarosserie zu führen.

Hinsichtlich der Ausbildung der Sensoreinheit wurden bislang keine näheren Angaben gemacht.

Beispielsweise könnte die Sensoreinheit zur Messung von auf die Kupplungskugel wirkenden Kräften, beispielsweise einer Stützkraft oder Zugkraft, ausgebildet sein.

Eine besonders günstige Lösung sieht vor, dass die Sensoreinheit ein Element einer Knickwinkelerfassungseinheit ist.

Mit einer derartigen Knickwinkelerfassungseinheit erfolgt üblicherweise eine Erfassung einer Drehstellung einer Zugkugelkupplung eines Anhängers relativ zur Kupplungskugel mit der Kupplungskugelmittelachse als Drehachse, so dass die Möglichkeit besteht bezogen auf eine vertikale Längsmittelebene des Kraftfahrzeugs und eine vertikale Längsmittelebene des Anhängers den Knickwinkel zwischen diesen beiden Längsmittelebenen zu erfassen, und zwar insbesondere entweder zur Ermittlung des fahrdynamischen Zustands oder zum Rückwärtsfahren.

Eine Möglichkeit der Ausbildung der Sensoreinheit ist die, dass diese die Beeinflussung eines von dieser Sensoreinheit ausgehenden Magnetfeldes durch die Zugkugelkupplung, insbesondere die durch die Zugkugelkupplung geschaffene magnetische Asymmetrie erfasst und darüber den Knickwinkel erfasst, wobei auch in diesem Fall die Sensoreinheit in der Kupplungskugel angeordnet ist.

Eine andere vorteilhafte Lösung sieht vor, dass die Knickwinkelerfassungseinheit einen an der Kupplungskugel drehbar gelagerten Mitnehmer aufweist und dass die Sensoreinheit die jeweilige Drehstellung des Mitnehmers bezogen auf die Kupplungskugelmittelachse als Drehachse erfasst.

Dabei könnte der Mitnehmer in unterschiedlichster Art und Weise an der Kupplungskugel ausgebildet sein, beispielsweise könnte der Mitnehmer als Kugelkappe der Kupplungskugel ausgebildet sein.

Eine vorteilhafte Lösung sieht jedoch vor, dass der Mitnehmer als Mitnahmering ausgebildet ist, welcher in einer an einer Außenseite der Kupplungskugel und insbesondere zur Kupplungskugelmittelachse konzentrisch umlaufenden Ringnut drehbar angeordnet und geführt ist.

Ein derartiger Mitnahmering hat vorzugsweise über die äußere Kugeloberfläche der Kupplungskugel überstehende Mitnahmeelemente, die mit der Zugkugelkupplung eines Anhängers in Wechselwirkung treten, d.h. entweder reibschlüssig oder formschlüssig durch die Zugkugelkupplung des Anhängers mitgedreht werden.

Die Lagereinheit kann in unterschiedlichster Art und Weise ausgebildet sein.

Eine mögliche Lösung der Lagereinheit sieht vor, dass diese eine mehrachsige Schwenkbarkeit zulässt oder eine Schwenkbarkeit kombiniert mit einer Verschiebeeinheit.

Eine besonders günstige Ausbildung der Lagereinheit sieht jedoch vor, dass diese in der Lage ist, den Kugelhals um nur eine Schwenkachse, vorzugsweise um eine schräg zu einer vertikalen Längsmittelebene des Kraftfahrzeugs verlaufende Schwenkachse, zwischen der Ruhestellung und der Arbeitsstellung verschwenkbar ist und somit zusätzlich zu dieser einen Schwenkachse keine zusätzlichen Bewegungen erforderlich sind, um von der Arbeitsstellung in die Ruhestellung und umgekehrt zu kommen.

Hinsichtlich der Ausbildung des Kugelhalses selber sind bislang ebenfalls keine näheren Angaben gemacht.

Vorzugsweise könnte der Kugelhals durch die unterschiedlichsten Fertigungsverfahren geformt sein.

Eine Möglichkeitist, zumindest die Eintiefungen spanabhebend, beispielsweise durch Fräsen, herzustellen.

Eine besonders günstige Lösung sieht vor, dass der Kugelhals als Schmiedeteil ausgebildet ist und somit die gesamte primäre Formgebung des Kugelhalses durch das Schmieden des Schmiedeteils erfolgt.

In diesem Fall sind vorzugsweise auch die Eintiefungen in den Kugelhals bei der Herstellung desselben eingeschmiedete Eintiefungen.

Dagegen wird der Kanal vorzugsweise durch eine spanabhebende Bearbeitung des geschmiedeten Kugelhalses hergestellt, insbesondere durch eine oder mehrere Bohrungen in dem Kugelhals.

Weitere Merkmale und Vorteile sind Gegenstand der nachfolgenden Beschreibung sowie der zeichnerischen Darstellung einer erfindungsgemäßen Anhängekupplung in der Zeichnung zeigen:
- Fig. 1: eine Ansicht eines Kraftfahrzeugs, insbesondere eines Personenkraftfahrzeugs von hinten mit dem Kugelhals der an diesem Kraftfahrzeug angeordneten Anhängekupplung;
- Fig. 2: eine Ansicht entsprechend Fig. 1 mit abgenommener Stoßfängereinheit und daher auf die Trägereinheit freigegebenem Blick mit Darstellung der Lagereinheit als Schwenklagereinheit, wobei der Kugelhals in der Arbeitsstellung steht;
- Fig. 3: eine Darstellung ähnlich Fig. 2 bei in Ruhestellung stehendem Kugelhals;
- Fig. 4: eine perspektivische Ansicht des Kugelhalses mit Schwenkkörper von in Fahrtrichtung gesehen vorne links;
- Fig. 5: eine Darstellung entsprechend Fig. 4 mit in eine Aufnahme des Kugelhalses eingesetzter Kontakteinheit;
- Fig. 6: eine Draufsicht auf eine in Fahrtrichtung gesehene rechte Seite des Kugelhalses ohne Kontakteinheit;
- Fig. 7: eine Darstellung des Kugelhalses entsprechend Fig. 6 mit Darstellung der Führung der elektrischen Leitung von dem Ausgang des Kanals zur Kontakteinheit und weiter eines von der Kontakteinheit wegführenden Kabelbaums in einer Eintiefung im vierten Kugelhalsabschnitt;
- Fig. 8: eine Draufsicht auf den Kugelhals in Richtung des Pfeils A in Fig. 4;
- Fig. 9: eine Darstellung der Draufsicht auf den Kugelhals gemäß Fig. 8 mit eingebauter Kontakteinheit;
- Fig. 10: einen Schnitt längs Linie 10-10 in Fig. 6 und
- Fig. 11: einen Schnitt längs Linie 11-11 in Fig. 6.

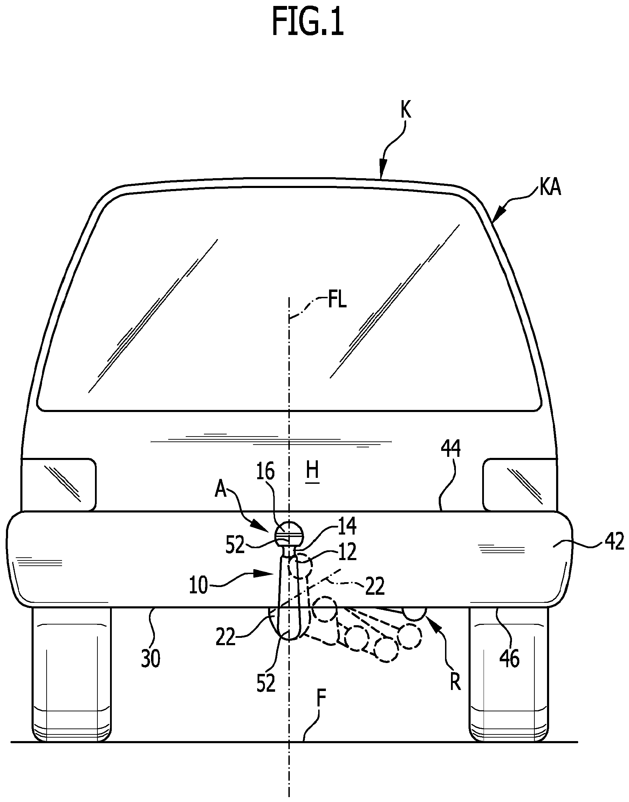

Ein in Fig. 1 bis 3 dargestelltes erstes Ausführungsbeispiel einer erfindungsgemäßen Anhängekupplung für ein Kraftfahrzeug K, insbesondere ein Personenkraftfahrzeug, dargestellt in Fig. 1, umfasst einen als Ganzes mit 10 bezeichneten Kugelhals, welcher an einem ersten Ende 12 einen Kugelansatz 14 aufweist, der eine Kupplungskugel 16 trägt.

Der Kugelhals 10 erstreckt sich dann seinerseits von dem ersten Ende 12 bis zu einem zweiten Ende 22, welches mittels einer als Ganzes mit 24 bezeichneten Schwenklagereinheit um eine Schwenkachse 26 schwenkbar an einer als Ganzes mit 32 bezeichneten Trägereinheit der Anhängekupplung gelagert ist, wobei die Trägereinheit 32 ein Tragelement 34 aufweist, welches fest mit einem Querträger 36 verbunden ist, der sich quer zu einer Fahrzeuglängsrichtung ungefähr parallel zu einer hinteren Stoßfängereinheit 42 des Kraftfahrzeugs K erstreckt und beispielsweise über zeichnerisch nicht dargestellte Verbindungselemente mit einem Heckbereich H der Kraftfahrzeugkarosserie KA verbunden ist.

Die Stoßfängereinheit 42 ist dabei so angeordnet, dass sie den Querträger 36 auf einer der Heckseite H der Kraftfahrzeugkarosserie KA abgewandten Seite überdeckt.

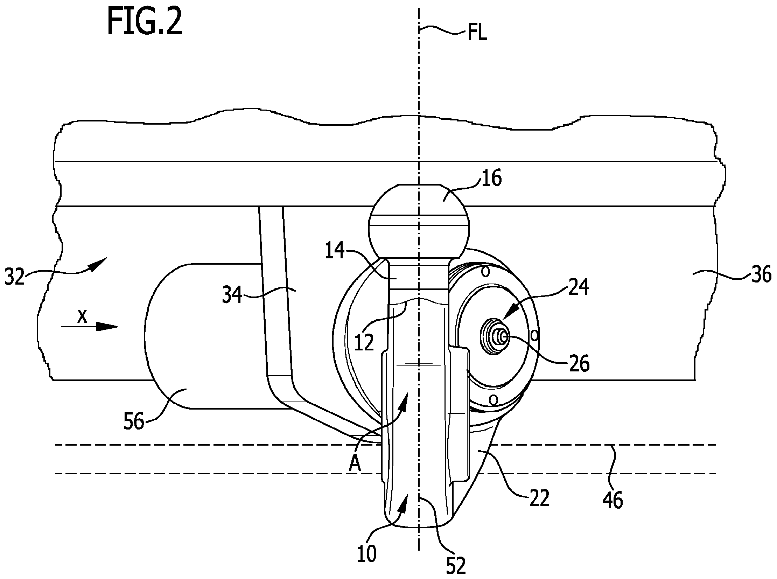

In einer in Fig. 1 und 2 dargestellten Arbeitsstellung A erstreckt sich der Kugelhals 10 ausgehend von der Schwenklagereinheit 24, die von der Stoßfängereinheit 42 ebenfalls überdeckt ist, unter der Stoßfängerunterkante 46 hindurch und dann von einer Fahrbahn F weg nach oben, so dass die Kupplungskugel 16 in definierter Höhe über der Fahrbahn F und in Fahrtrichtung gesehen hinter der Stoßfängereinheit 42 positioniert ist.

Mit der erfindungsgemäßen Schwenklagereinheit 24 lässt sich der Kugelhals 10 von der in Fig. 1 und 2 dargestellten Arbeitsstellung A in eine Ruhestellung R verschwenken, in welcher die Kupplungskugel 16 unter der Stoßfängerunterkante 46 hindurch bewegt wird, und zwar so, dass der Kugelhals 10 zwischen dem Querträger 36 und der Stoßfängereinheit 42 positioniert und in der Ruhestellung R weitgehend von der Stoßfängereinheit 42 überdeckt ist.

Vorzugsweise ist die Schwenklagereinheit 24 so ausgebildet, dass die Bewegung des Kugelhalses 10 zwischen der Arbeitsstellung A und der Ruhestellung R nur durch eine Schwenkbewegung um die Schwenkachse 26 möglich ist, wobei die Schwenkachse 26 schräg zu einer vertikalen Fahrzeuglängsmittelebene FL verläuft.

Die Fahrzeuglängsmittelebene FL verläuft dabei in der Arbeitsstellung A des Kugelhalses 10 so, dass in dieser eine Kupplungskugelmittelachse 52 der Kupplungskugel 16 liegt, zu welcher sowohl die Kupplungskugel 16 als auch der Kugelansatz 14 rotationssymmetrisch ausgebildet sind (Fig. 1 und 2).

Bei dem dargestellten Ausführungsbeispiel ist die Schwenklagereinheit 24 vorzugsweise so ausgebildet, dass ein mit dem zweiten Ende 22 des Kugelhalses 10 verbundener Schwenkkörper 54 einen Außenkörper der Schwenklagereinheit 24 bildet, der mitsamt dem Kugelhals 10 um die Schwenkachse 26 verschwenkbar ist.

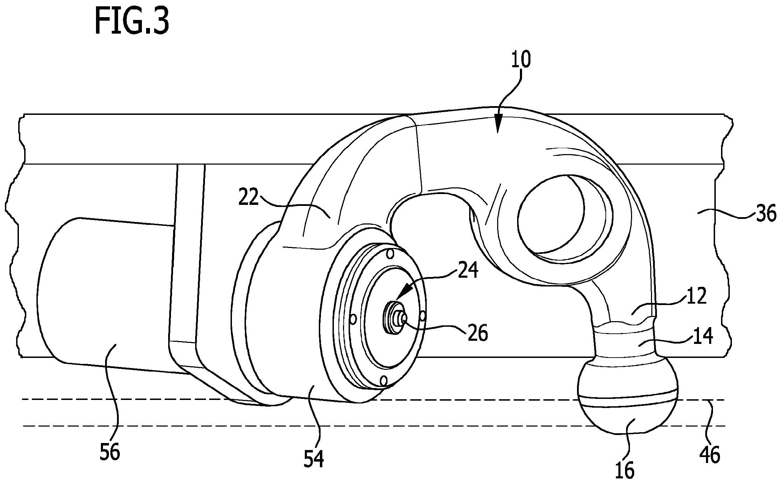

Zur Ausführung der Schwenkbewegung um die Schwenkachse 26 ist die Schwenklagereinheit 24 beispielsweise noch zusätzlich durch eine Antriebseinheit 56 (Fig. 2 und 3) antreibbar, welche mindestens einen elektrischen Antriebsmotor oder gegebenenfalls zwei elektrische Antriebsmotoren aufweist, die einerseits zum Antrieb einer zeichnerisch nicht dargestellten Verriegelungsvorrichtung der Schwenklagereinheit 24 und zum Ausführen der Schwenkbewegung des Schwenkkörpers 54 um die Schwenkachse 26 dienen.

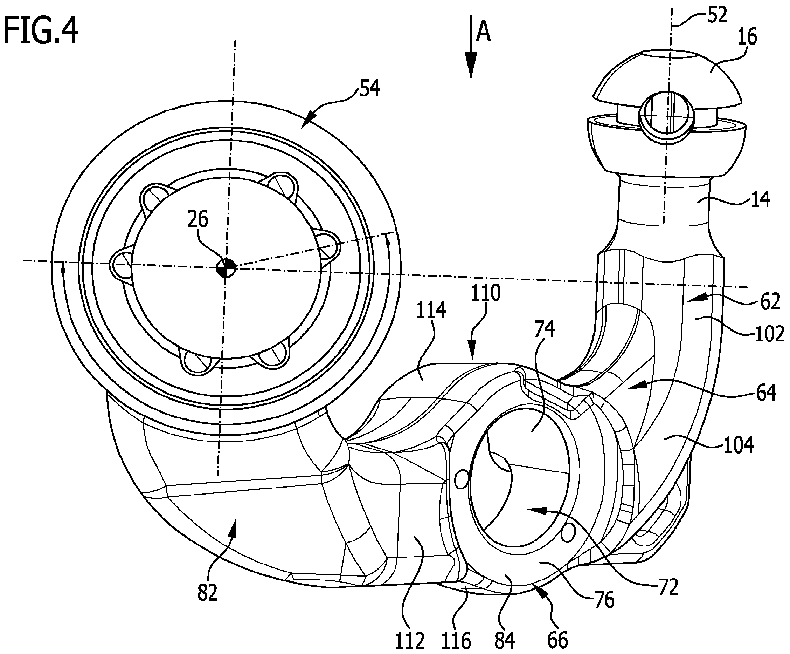

Wie noch einmal vergrößert in den Fig. 4 bis 7 dargestellt, ist der Kugelhals 10 vorzugsweise so ausgebildet, dass dieser einen im Bereich des ersten Endes 12 an den Kugelansatz 14 anschließenden ersten Kugelhalsabschnitt 62 umfasst, welcher sich in Richtung der Kupplungskugelmittelachse 52, vorzugsweise parallel zu dieser, von dem Kugelansatz 14 weg erstreckt.

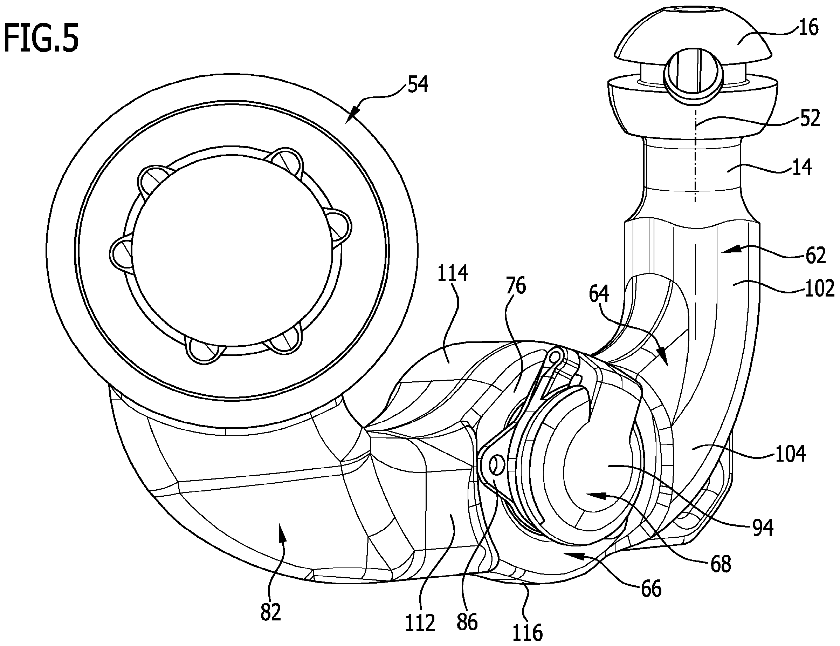

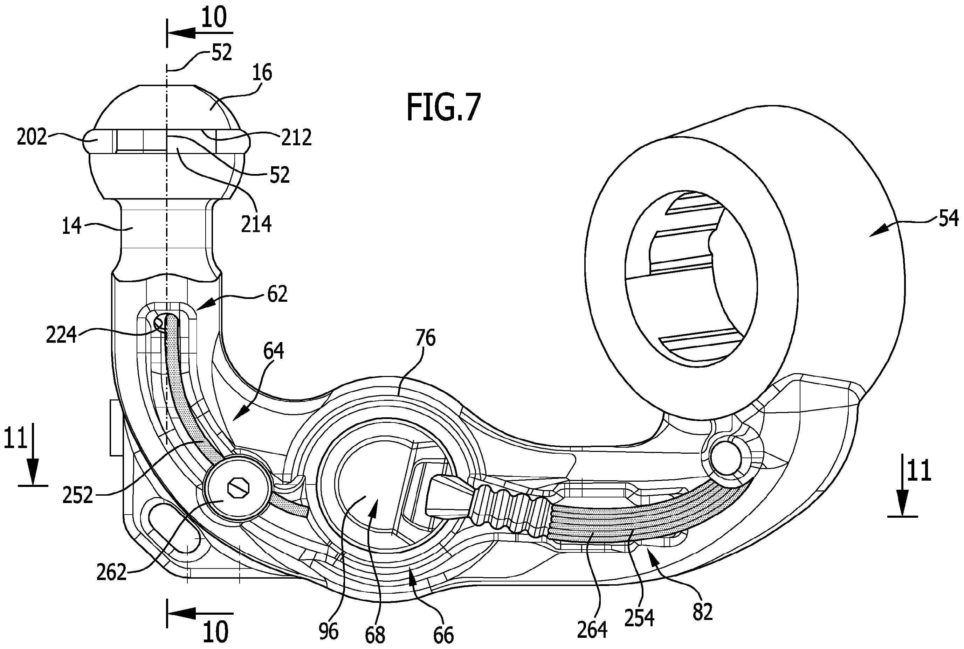

An diesen ersten Kugelhalsabschnitt 62 schließt sich ein zweiter Kugelhalsabschnitt 64 an, welcher gebogen zur Kupplungskugelmittelachse 52 verläuft und sich in der Arbeitsstellung A von der Kupplungskugelmittelachse 52 weg seitlich in Richtung des Heckbereichs H der Fahrzeugkarosserie KA erstreckt. Der zweite Kugelhalsabschnitt 64 geht an seinem dem ersten Kugelhalsabschnitt 62 gegenüberliegenden Ende in einen dritten Kugelhalsabschnitt 66 über, welcher eine Kontakteinheit 68 trägt und dabei vorzugsweise eine Aufnahme 72 für die Kontakteinheit aufweist (Fig. 5 und 7).

Die Aufnahme 72 kann als Flanschansatz ausgebildet sein, an welchem die Kontakteinheit montierbar ist.

Im dargestellten Ausführungsbeispiel ist die Aufnahme 72 ein in den dritten Kugelhalsabschnitt 66 integrierter Durchbruch 74, welcher von einem durch den dritten Kugelhalsabschnitt 66 gebildeten Ringkörper 76 umschlossen ist und welcher die Kontakteinheit 68 aufnimmt.

An diesen dritten Kugelhalsabschnitt 66 schließt sich wiederum ein vierter Kugelhalsabschnitt 82 an, welcher sich bis zu dem zweiten Ende 22 des Kugelhalses 10 erstreckt und beispielsweise ein gebogener Kugelhalsabschnitt ist, der in den Schwenkkörper 54 übergeht.

Vorzugsweise bilden der erste Kugelhalsabschnitt 62, der zweite Kugelhalsabschnitt 64, der dritte Kugelhalsabschnitt 66 und der vierte Kugelhalsabschnitt 82 ein einstückiges Teil, welches vorzugsweise ebenfalls einstückig in den Kugelansatz 14 und die Kupplungskugel 16 übergeht sowie andererseits einstückig in den Schwenkkörper 54 übergeht.

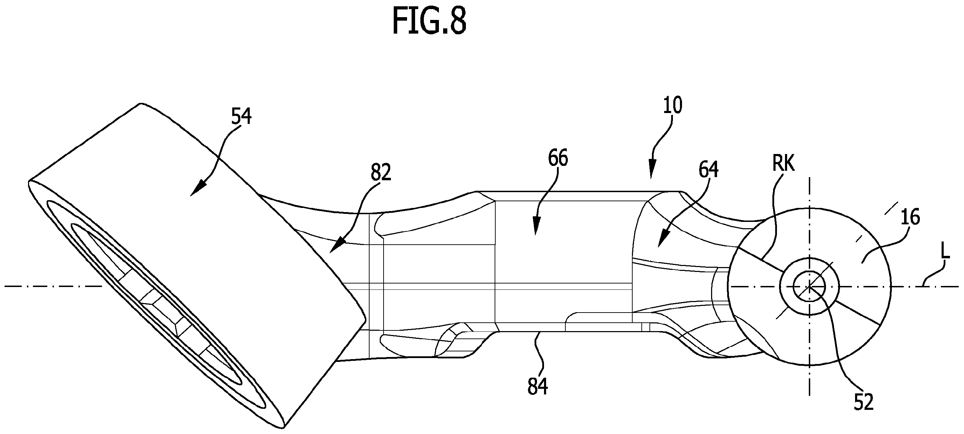

Wie in Fig. 8 dargestellt, existiert auch bei dem Kugelhals 10 eine Längsmittelebene L, welche einerseits durch die Kupplungskugelmittelachse 52 verläuft und in der Arbeitsstellung A des Kugelhalses 10 mit der Fahrzeuglängsmittelebene FL zusammenfällt.

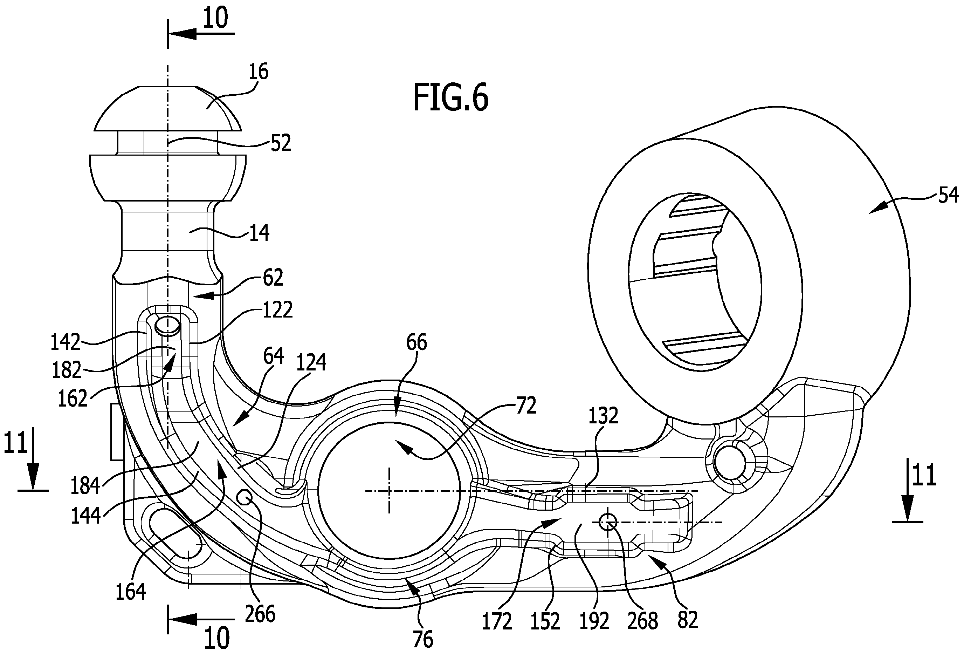

Dabei können allerdings die Kugelhalsabschnitte 62, 64, 66 und 82 entweder symmetrisch oder, wie im Ausführungsbeispiel gemäß Fig. 6 dargestellt, asymmetrisch zur Längsmittelebene L ausgebildet sein und somit zu dieser zumindest abschnittsweise asymmetrisch verlaufen.

Beispielsweise ist der dritte Kugelhalsabschnitt 66 so ausgebildet, dass dieser auf einer Seite eine Flanschfläche 84 zur Abstützung eines Montageflansches 86 der Kontakteinheit 68 aufweist, die beispielsweise einen am Montageflansch 86 gelagerten Zugangsdeckel 94 aufweist, die sich mit einem Gehäusekörper durch den Durchbruch 74 hindurcherstreckt und auf einer dem Montageflansch 86 gegenüberliegenden Seite durch einen rückseitigen Deckel 96 verschlossen ist.

Wie in Fig. 4 und 5 dargestellt, weist der Kugelhals 10 im Bereich des ersten Kugelhalsabschnitts 62, im Bereich des zweiten Kugelhalsabschnitts 64 und im Bereich des vierten Kugelhalsabschnitts 82 eine Längsseitenkontur 102, 104 bzw. 112 auf, die zwischen einer in der Arbeitsstellung A der Fahrbahn F abgewandten Oberseitenkontur 114 und einer in der Arbeitsstellung A einer Fahrbahn F zugewandten Unterseitenkontur 116 des Kugelhalses 110 konvex gewölbt oder näherungsweise eben verlaufen und somit frei von Vertiefungen sind.

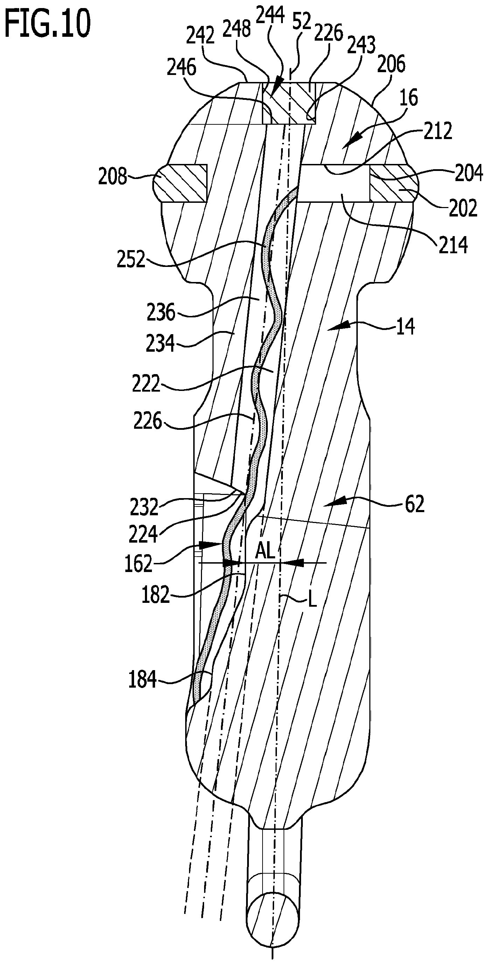

Im Gegensatz dazu sind, wie in Fig. 6 und 7 dargestellt, auf der der Längsmittelebene L gegenüberliegenden Seite des Kugelhalses 10 im Bereich des ersten Kugelhalsabschnitts 62, des zweiten Kugelhalsabschnitts 64 und des vierten Kugelhalsabschnitts 82 Längsseitenkonturen 122, 124 und 132 vorgesehen, die ausgehend von einer in diesen Kugelhalsabschnitten 62, 64 und 82 vorliegenden Außenkonturen 142, 144 und 152 sich in den jeweiligen Kugelhalsabschnitt 62, 64 bzw. 82 hineinerstreckende Eintiefungen 162, 164 und 172 aufweisen, wobei die Eintiefung 162 sich ausgehend von der Außenkontur 142 am tiefsten in den ersten Kugelhalsabschnitt 62 hineinerstreckt, und zwar bis zu einem Eintiefungsboden 182, der in einem Abstand AL von der Längsmittelebene L angeordnet ist (Fig. 10), welcher mindestens ein Zehntel, noch besser mindestens zwei Zehntel eines Radius RK der Kupplungskugel 16 entspricht.

Dagegen liegt ein Eintiefungsboden 184 der Eintiefung 164 in einem Abstand von der Längsmittelebene L, welcher größer ist als die Hälfte eines Radius RK der Kupplungskugel 16.

Die Eintiefung verläuft 164 von der Eintiefung 162 bis zur Aufnahme 72 für die Kontakteinheit 68.

Ferner verläuft die Eintiefung 172 mit einem Eintiefungsboden 192 ebenfalls in einem Abstand von der Längsmittelebene L des Kugelhalses 10, welcher mindestens zwei Drittel des Radius der Kupplungskugel 16 entspricht.

Wie in Fig. 10 dargestellt, ist die Kupplungskugel 16 zur Aufnahme eines eine Drehstellung einer an der Kupplungskugel 16 angreifenden Zugkugelkupplung erfassenden Mitnahmerings 202 mit einer um die Kupplungskugelmittelachse 52 umlaufenden Ringnut 204 versehen, in welcher der Mitnahmering 202 relativ zur Kupplungskugel 16 drehbar geführt und gelagert ist.

Dabei liegt die Ringnut 204 innerhalb einer geometrischen äußeren Kugelfläche 206, während der Mitnahmering 202 zumindest bereichsweise mit Mitnahmekörpern 208 über die äußere Kugelfläche 206 radial zur Kupplungskugelmittelachse 52 übersteht, um zu erreichen, dass der Mitnahmering 202 mit der an der Kupplungskugel 16 angreifenden Zugkugelkupplung zusammenwirkt, um bei einer Drehung der Zugkugelkupplung um die Kupplungskugelmittelachse 52 den Mitnahmering 202 mitzudrehen.

Ferner ist innerhalb der äußeren Kugelfläche 206 und innerhalb der Ringnut 204 ein Aufnahmeraum 212 vorgesehen, in welchem eine Sensoreinheit 214 zur Erfassung der Drehstellungen des Mitnahmerings 202 angeordnet ist, wobei die Erfassung der Drehstellungen des Mitnahmerings 202 beispielsweise über magnetische oder induktive Wechselwirkung entsprechend den bekannten Prinzipien von Drehwinkelmesseinheiten erfolgt.

Die Sensoreinheit 214 bildet dabei zusammen mit dem Mitnahmering 202 eine Knickwinkelerfassungseinheit 216 mit welcher die Stellung der an der Kupplungskugel 16 angreifenden Zugkugelkupplung bezogen auf die Kupplungskugelmittelachse 52 als Drehachse erfassbar ist.

Dabei erstreckt sich der Aufnahmeraum 212 vorzugsweise von der Ringnut 204 bis zur Kupplungskugelmittelachse 52.

Um zu der innerhalb der äußeren Kugelfläche 206 in der Aufnahme 212 angeordneten Sensoreinheit 214 eine elektrische Zuleitung führen zu können, ist ein sowohl die Kupplungskugel 16 als auch den Kugelansatz 14 und den ersten Kugelhalsabschnitt 62 durchsetzender Kanal 222 vorgesehen, welcher im Innern der Kupplungskugel 16 mit dem Aufnahmeraum 212 in Verbindung steht, das heißt diesen durchsetzt oder zumindest tangiert, und bis zu einem Ausgang 224 verläuft, welcher in der Eintiefung 162 des ersten Kugelhalsabschnitts 62 liegt.

Vorzugsweise ist der Kanal 222 so ausgeführt, dass er koaxial zu einer Kanalachse 226 verläuft, welche die Längsmittelebene L des Kugelhalses 10 innerhalb der Kupplungskugel 16 schneidet, vorzugsweise so schneidet, dass die Kanalachse 226 gleichzeitig die Kupplungskugelmittelachse 52 ebenfalls schneidet.

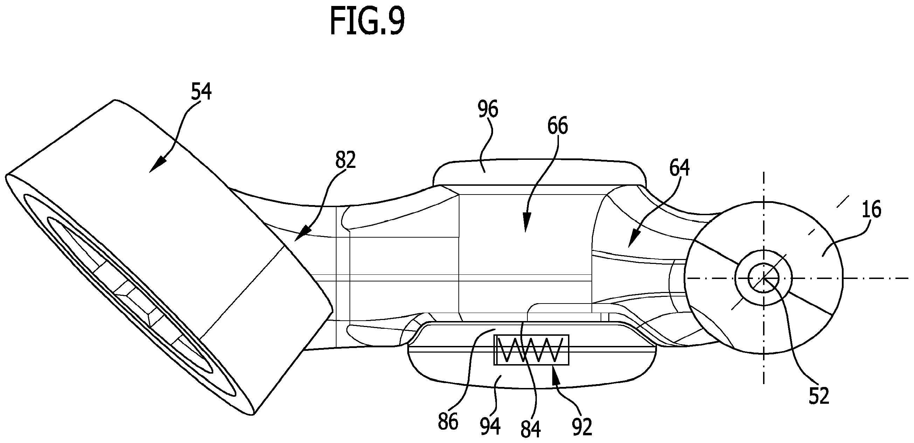

Ferner verläuft die Kanalachse 226 ausgehend von dem Schnittpunkt mit der Längsmittelebene L und gegebenenfalls auch der Kupplungskugelmittelachse 52 schräg zur Längsmittelebene L oder zur Kupplungskugelmittelachse 52 derart in Richtung des Ausgangs 224, dass der Abstand von der Längsmittelebene L oder der Kupplungskugelmittelachse 52 mit zunehmendem Verlauf in Richtung des Ausgangs 224 zunimmt, wie in Fig. 9 dargestellt.

Vorzugsweise verläuft die Kanalachse 226 des Kanals 222 so, dass diese die Eintiefung 162 im Bereich ihres Eintiefungsbodens 182 schneidet, so dass der Ausgang 224 teilweise im Bereich des Eintiefungsbodens 182 und teilweise im Bereich einer Eintiefungsseitenwand 232 liegt, welche sich über dem jeweiligen Eintiefungsboden 182 erhebt.

Durch einen derartigen Verlauf des Kanals 222 lässt sich der Abstand der Kanalachse 226 von der Längsmittelebene L und gegebenenfalls auch der Kupplungskugelmittelachse 52 so gering wie möglich halten, um insbesondere im Bereich des Kugelansatzes 14 eine ausreichend dicke, den Kanal 222 umschließende Wand 234 zur Verfügung zu haben, die für die Stabilität der Verbindung zwischen der Kupplungskugel 16 und dem ersten Ende 12 des Kugelhalses 10 wesentlich ist.

Besonders günstig ist es, wenn der Kanal 222 als zur Kanalachse 226 koaxiale Bohrung 236 ausgeführt ist, welche ausgehend von einer dem Kugelansatz 14 gegenüberliegenden Abflachung 242 der Kupplungskugel 16 die gesamte Kupplungskugel 16 durchsetzt und auch durch den Kugelansatz 14 und den ersten Kugelhalsabschnitt 62 durchsetzend bis zum Ausgang 224 in der Eintiefung 162 verläuft.

Zum Einbringen des Kanals 222 ausgehend von der Abflachung der Kupplungskugel 16, wird zuerst vorzugsweise ein ausgehend von der Abflachung 242 in die Kupplungskugel 16 koaxial zur Kupplungskugelmittelachse 52 verlaufendes Sackloch 243 gebohrt, dessen Durchmesser insbesondere größer als der der nachfolgend hergestellten Kanalbohrung 236 ist, beispielsweise um einen Faktor von mindestens 1,2, noch besser mindestens 1,4, größer ist als der Kanal 222.

Insbesondere lässt sich dadurch ausgehend von einem Boden 246 des Sacklochs 243 die schräg zur Kupplungskugelmittelachse 52 verlaufende Kanalbohrung 236 als von dem Boden 246 des Sacklochs 243 ausgehende Schrägbohrung problemlos ausführen, die dann bis zur Eintiefung 162 verläuft.

Vorzugsweise erstreckt sich die durch das Sackloch 243 hergestellte Ausnehmung 244 ausgehend von der Abflachung 242 lediglich mit einer Tiefe in Richtung der Kupplungskugelmittelachse 52, die maximal das 0,7-fache, noch besser maximal das 0,8-fache des Durchmessers des Sacklochs oder der Ausnehmung 244 beträgt.

Somit umfasst der Kanal 222 insgesamt eine durch Herstellung des Sacklochs 243 gebildete Ausnehmung 244 und die unter Ausbildung einer Stufe sich an die Ausnehmung 244 anschließende Kanalbohrung 236.

Um den Kanal 222 im Bereich der Abflachung 242 verschließen zu können, ist die Ausnehmung 244 im unmittelbaren Anschluss an die Abflachung 242 mit zur Kupplungskugelmittelachse 52 koaxialen zylindrischen Wänden 248 versehen, welche einen Verschlussstopfen 226 aufnimmt, so dass weder Schmutz noch Feuchtigkeit in den Kanal 222 eindringen können.

Eine von der Sensoreinheit 214 wegführende elektrische Leitung 252 verläuft, wie in Fig. 7 und Fig. 10 dargestellt, durch den Kanal 222 bis zum Ausgang 224 und dann in der Eintiefung 162 zur Eintiefung 164 bis zur Kontakteinheit 68 und von der Kontakteinheit 68 in Form eines weiterführenden Kabelbaums 254 in Richtung der Schwenklagereinheit 224 und von dort zu einer fahrzeugseitigen Anschlusseinheit.

Dadurch, dass die elektrische Leitung 252 in den Eintiefungen 162 und 164 bis zur Kontakteinheit 68 verlaufen kann, und dabei jeweils auf dem entsprechenden Eintiefungsboden 182 und 184 aufliegt, ist die elektrische Leitung 252 gegen Beschädigungen geschützt, insbesondere auch gegen Beschädigungen von dem ersten Kugelhalsabschnitt 62 oder dem zweiten Kugelhalsabschnitt 64 umgreifenden Sicherungsseilen oder weiteren an diesen angreifenden Elementen.

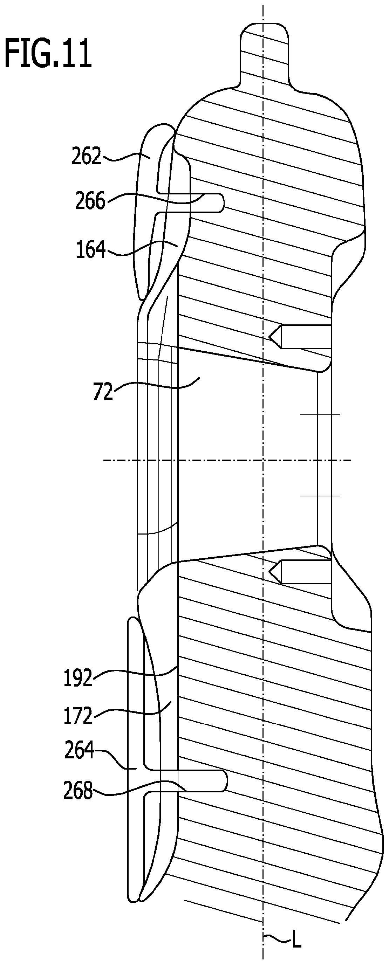

Zusätzlich besteht noch die Möglichkeit, wie in Fig. 7 dargestellt, die Eintiefungen 162 und 164 mit einer Fixierung (Fig. 7) und/oder zumindest teilweisen Abdeckung 262, 264 (Fig. 11) zu verschließen und somit noch einen zusätzlichen Schutz für die elektrische Leitung 252 vorzusehen.

Die Abdeckungen 262, 264 lassen sich dabei vorzugsweise durch ausgehend von dem jeweiligen Eintiefungsboden 182 und 184 in den Kugelhals eindringenden Bohrungen 266, 268 mit entsprechenden Fixierungszapfen, beispielsweise versehen mit Tannenbaumstrukturen, fixieren.

## Patentansprüche

1. Anhängekupplung für Kraftfahrzeuge (K), insbesondere Personenkraftfahrzeuge, umfassend einen Kugelhals (10), der an einem ersten Ende (12) einen Kugelansatz (14) und eine durch den Kugelansatz (14) gehaltene Kupplungskugel (16) trägt, eine an einer Heckseite (H) einer Fahrzeugkarosserie (KA) fahrzeugfest montierbare Trägereinheit (32), eine an der Trägereinheit (32) angeordnete Lagereinheit (24), mittels welcher der Kugelhals (10) mit einem zweiten Ende (22) an der Trägereinheit (32) zwischen einer Arbeitsstellung (A) und einer Ruhestellung (R) bewegbar gelagert ist, und eine in der Kupplungskugel (16) angeordnete Sensoreinheit (214), zu welcher eine elektrische Leitung (252) geführt ist, die zumindest abschnittsweise in einem den Kugelansatz (14) und den Kugelhals (10) teilweise durchsetzenden Kanal (222) geführt ist, welcher von einem Inneren der Kupplungskugel (16) durch den Kugelansatz (14) hindurch bis zu einem Ausgang (224) am Kugelhals (10) verläuft,
wobei der Kanal (222) schräg zu einer Kupplungskugelmittelachse (52) verläuft, im Innern der Kupplungskugel (16) die Kupplungskugelmittelachse (52) schneidet und zu einer im Abstand von der Kupplungskugelmittelachse (52) endenden, von einer Außenkontur (122) des Kugelhalses (16) in diesen eindringenden Eintiefung (162) im Kugelhals (16) verläuft, **dadurch gekennzeichnet, dass** in der Eintiefung (162) der Ausgang (224) liegt, dass die Kupplungskugel (16) eine sich von einer dem Kugelansatz (14) gegenüberliegenden Seite in diese hineinerstreckende Ausnehmung (244) aufweist und dass sich der Kanal (222) ausgehend von der Ausnehmung (244) schräg zur Kupplungskugelmittelachse (52) bis zur Eintiefung (162) erstreckt.

2. Anhängekupplung nach Anspruch 1, **dadurch gekennzeichnet, dass** der Kanal (222) ausgehend von dem Innern der Kupplungskugel (16) kreuzungsfrei und mit zunehmendem Abstand von der Kupplungskugelmittelachse (52) verläuft.

3. Anhängekupplung nach einem der voranstehenden Ansprüche, **dadurch gekennzeichnet, dass** die Ausnehmung (244) eine zur Kupplungskugelmittelachse (52) koaxiale Ausnehmung (244) ist.

4. Anhängekupplung nach einem der voranstehenden Ansprüche, **dadurch gekennzeichnet, dass** der Kanal (222) schräg zu einer durch die Kupplungskugelmittelachse (52) verlaufenden Längsmittelebene (L) verläuft.

5. Anhängekupplung nach einem der voranstehenden Ansprüche, **dadurch gekennzeichnet, dass** die Eintiefung (162) sich ausgehend von einer Längsseitenkontur (122) des Kugelhalses (10) in den Kugelhals (10) hineinerstreckt.

6. Anhängekupplung nach einem der voranstehenden Ansprüche, **dadurch gekennzeichnet, dass** eine Kanalachse (226), zu welcher der Kanal (222) koaxial verläuft, die Eintiefung (162) nahe eines Eintiefungsbodens (182) schneidet und dass insbesondere die Kanalachse (226) den Eintiefungsboden (182) schneidet.

7. Anhängekupplung nach einem der voranstehenden Ansprüche, **dadurch gekennzeichnet, dass** der Kanal (226) eine Eintiefungsseitenwand (232) durchdringt.

8. Anhängekupplung nach einem der voranstehenden Ansprüche, **dadurch gekennzeichnet, dass** der Ausgang (224) des Kanals (222) sowohl eine Eintiefungsseitenwand (232) als auch einen Eintiefungsboden (182) der Eintiefung (162) durchsetzt.

9. Anhängekupplung nach einem der voranstehenden Ansprüche, **dadurch gekennzeichnet, dass** der Eintiefungsboden (182) einen Abstand von der Längsmittelebene (L) aufweist, der größer ist als ein Zehntel eines Radius (RK) der Kupplungskugel (16).

10. Anhängekupplung nach einem der voranstehenden Ansprüche, **dadurch gekennzeichnet, dass** der Kugelhals (10) einen sich ausgehend von dem Kugelansatz (14) in Richtung der Kupplungskugelmittelachse (52) verlaufenden ersten Kugelhalsabschnitt (62) aufweist und dass insbesondere die Eintiefung (162) in dem ersten Kugelhalsabschnitt (62) angeordnet ist.

11. Anhängekupplung nach Anspruch 10, **dadurch gekennzeichnet, dass** die Eintiefung (162) sich von einer Längsseitenkontur (122) des ersten Kugelhalsabschnitts (162) in Richtung auf die Längsmittelebene (L) zu in den Kugelhals (10) hinein erstreckt.

12. Anhängekupplung nach einem der voranstehenden Ansprüche, **dadurch gekennzeichnet, dass** der Kugelhals (10) einen sich an den ersten Kugelhalsabschnitt (62) anschließenden und gebogen zur Kupplungskugelmittelachse (52) verlaufenden zweiten Kugelhalsabschnitt (64) aufweist und dass insbesondere der zweite Kugelhalsabschnitt (64) eine sich an die Eintiefung (162) im ersten Kugelhalsabschnitt (62) anschließende Eintiefung (164) aufweist.

13. Anhängekupplung nach einem der voranstehenden Ansprüche, **dadurch gekennzeichnet, dass** der Kugelhals (10) einen sich an den zweiten Kugelhalsabschnitt (64) anschließenden, eine Kontakteinheit (68) tragenden dritten Kugelhalsabschnitt (66) aufweist, dass insbesondere der dritte Kugelhalsabschnitt (66) eine in diesen eingeformte Aufnahme (72) für die Kontakteinheit (92) aufweist und dass insbesondere die zweite Eintiefung (164) zu der Kontakteinheit (68) im dritten Kugelhalsabschnitt (66) verläuft.

14. Anhängekupplung nach einem der voranstehenden Ansprüche, **dadurch gekennzeichnet, dass** der Kugelhals (10) einen sich an den dritten Kugelhalsabschnitt (66) anschließenden und in ein Element (54) der Lagereinheit (24) übergehenden vierten Kugelhalsabschnitt (82) aufweist und dass insbesondere der vierte Kugelhalsabschnitt (82) eine Eintiefung (172) aufweist.

15. Anhängekupplung nach einem der voranstehenden Ansprüche, **dadurch gekennzeichnet, dass** die Sensoreinheit (214) ein Element einer Knickwinkelerfassungseinheit (216) ist, dass insbesondere die Knickwinkelerfassungseinheit (216) einen an der Kupplungskugel (16) drehbar gelagerten Mitnahmering (202) aufweist und dass insbesondere der Mitnehmer als Mitnahmering (202) ausgebildet ist und in einer an einer Außenseite der Kupplungskugel (16) und insbesondere zur Kupplungskugelmittelachse konzentrisch umlaufenden Ringnut (204) drehbar angeordnet und geführt ist.

## Claims

1. Trailer coupling for motor vehicles (K), in particular passenger vehicles, comprising a ball neck (10) bearing, at a first end (12), a ball attachment (14) and a coupling ball (16) held by the ball attachment (14), a carrier unit (32) mountable on a rear side (H) of a vehicle body (KA) securely on the vehicle, a mounting unit (24) arranged on the carrier unit (32), the ball neck (10) being mounted with a second end (22) on the carrier unit (32) by way of said mounting unit for movement between an operative position (A) and a rest position (R), and a sensor unit (214) arranged in the coupling ball (16), an electric cable (252) leading to said sensor unit and being guided at least in sections in a channel (222) passing partially through the ball attachment (14) and the ball neck (10), said channel extending from an interior of the coupling ball (16) through the ball attachment (14) as far as an outlet (224) on the ball neck (10),
wherein the channel (222) extends at an angle to a central axis (52) of the coupling ball, intersects the central axis (52) of the coupling ball in the interior of the coupling ball (16) and extends as far as a cavity (162) in the ball neck (16) ending at a distance from the central axis (52) of the coupling ball and penetrating the ball neck (16) from an outer contour (122) thereof, **characterized in that** the outlet (224) is located in the cavity (162), **in that** the coupling ball (16) has a recess (244) extending from a side located opposite the ball attachment (14) into said side, and **in that** the channel (222) extends at an angle to the central axis (52) of the coupling ball proceeding from the recess (244) as far as the cavity (162).

2. Trailer coupling as defined in claim 1, **characterized in that** the channel (222) extends from the interior of the coupling ball (16) without any cross-over and at an increasing distance from the central axis (52) of the coupling ball.

3. Trailer coupling as defined in any one of the preceding claims, **characterized in that** the recess (244) is a recess (244) that is coaxial to the central axis (52) of the coupling ball.

4. Trailer coupling as defined in any one of the preceding claims, **characterized in that** the channel (222) extends at an angle to a longitudinal central plane (L) extending through the central axis (52) of the coupling ball.

5. Trailer coupling as defined in any one of the preceding claims, **characterized in that** the cavity (162) extends into the ball neck (10) proceeding from a longitudinal side contour (122) of the ball neck (10).

6. Trailer coupling as defined in any one of the preceding claims, **characterized in that** a channel axis (226), the channel (222) extending coaxially thereto, intersects the cavity (162) close to a base (182) of said cavity and **in that**, in particular, the channel axis (226) intersects the base (182) of the cavity.

7. Trailer coupling as defined in any one of the preceding claims, **characterized in that** the channel (226) penetrates a side wall (232) of the cavity.

8. Trailer coupling as defined in any one of the preceding claims, **characterized in that** the outlet (224) of the channel (222) passes through both a cavity side wall (232) and a base (182) of the cavity (162).

9. Trailer coupling as defined in any one of the preceding claims, **characterized in that** the base (182) of the cavity is spaced from the longitudinal central plane (L) at a distance greater than one tenth of a radius (RK) of the coupling ball (16).

10. Trailer coupling as defined in any one of the preceding claims, **characterized in that** the ball neck (10) has a first ball neck section (62) extending from the ball attachment (14) in the direction of the central axis (52) of the coupling ball and **in that**, in particular, the cavity (162) is arranged in the first ball neck section (62).

11. Trailer coupling as defined in claim 10, **characterized in that** the cavity (162) extends into the ball neck (10) proceeding from a longitudinal side contour (122) of the first ball neck section (162) in the direction towards the longitudinal central plane (L).

12. Trailer coupling as defined in any one of the preceding claims, **characterized in that** the ball neck (10) has a second ball neck section (64) adjoining the first ball neck section (62) and extending in an arc relative to the central axis (52) of the coupling ball and **in that**, in particular, the second ball neck section (64) has a cavity (164) adjoining the cavity (162) in the first ball neck section (62).

13. Trailer coupling as defined in any one of the preceding claims, **characterized in that** the ball neck (10) has a third ball neck section (66) adjoining the second ball neck section (64) and bearing a contact unit (68), **in that**, in particular, the third ball neck section (66) has a receptacle (72) formed in it for the contact unit (92) and **in that**, in particular, the second cavity (164) extends to the contact unit (68) in the third ball neck section (66).

14. Trailer coupling as defined in any one of the preceding claims, **characterized in that** the ball neck (10) has a fourth ball neck section (82) adjoining the third ball neck section (66) and merging into an element (54) of the bearing unit (24) and **in that**, in particular, the fourth ball neck section (82) has a cavity (172).

15. Trailer coupling as defined in any one of the preceding claims, **characterized in that** the sensor unit (214) is one element of a bending angle detection unit (216), **in that**, in particular, the bending angle detection unit (216) has an entraining ring (202) rotatably mounted on the coupling ball (16) and **in that**, in particular, the entrainer is designed as an entraining ring (202) and is arranged and guided for rotation in an annular groove (204) extending around an outer side of the coupling ball (16) and, in particular, concentrically to the central axis of the coupling ball.

## Revendications

1. Attelage pour véhicules automobiles (K), en particulier pour véhicules particuliers, comprenant un col de cygne (10) portant, sur une première extrémité (12), un épaulement de rotule (14) et une boule d'attelage (16) maintenue par l'épaulement de rotule (14), une unité support (32) pouvant être montée de manière fixe au véhicule sur un côté arrière (H) d'une carrosserie de véhicule (KA), une unité de palier (24) disposée sur l'unité support (32), au moyen de laquelle le col de cygne (10) est positionné de manière mobile, avec une deuxième extrémité (22), sur l'unité support (32) entre une position de travail (A) et une position de repos (R), et une unité de capteur (214) disposée dans la boule d'attelage (16), vers lequel est dirigé un câble électrique (252) qui passe, du moins par endroits, dans un canal (222) qui traverse en partie l'épaulement de rotule (14) et le col de cygne (10) et qui s'étend depuis un intérieur de la boule d'attelage (16) jusqu'à une sortie (224) sur le col de cygne (10) en traversant l'épaulement de rotule (14),
dans lequel le canal (222) est oblique par rapport à un axe médian (52) de la boule d'attelage, coupe l'axe médian (52) de la boule d'attelage à l'intérieur de celle-ci (16) et est dirigé vers un creux (162) dans le col de cygne (16) se terminant à distance de l'axe médian (52) de la boule d'attelage, pénétrant dans le col de cygne (16) depuis un contour extérieur (122) de celui-ci, **caractérisé en ce que** la sortie (224) se trouve dans le creux (162), **en ce que** la boule d'attelage (16) présente un évidement (244) s'insérant depuis un côté opposé à l'épaulement de rotule (14) dans ce côté et **en ce que** le canal (222) part de l'évidement (244) en oblique par rapport à l'axe médian (52) de la boule d'attelage jusqu'au creux (162).

2. Attelage selon la revendication 1, **caractérisé en ce que** le canal (222) part de l'intérieur de la boule d'attelage (16) sans se croiser et passe à une distance croissante de l'axe médian (52) de celle-ci.

3. Attelage selon l'une quelconque des revendications précédentes, **caractérisé en ce que** l'évidement (244) est un évidement coaxial (244) par rapport à l'axe médian (52) de la boule d'attelage.

4. Attelage selon l'une quelconque des revendications précédentes, **caractérisé en ce que** le canal (222) est oblique par rapport à un plan médian longitudinal (L) traversant l'axe médian (52) de la boule d'attelage.

5. Attelage selon l'une quelconque des revendications précédentes, **caractérisé en ce que** le creux (162) pénètre, à partir d'un contour latéral longitudinal (122) du col de cygne (10), dans le col de cygne (10).

6. Attelage selon l'une quelconque des revendications précédentes, **caractérisé en ce qu'**un axe de canal (226), par rapport auquel le canal (222) est coaxial, coupe le creux (162) à proximité d'un fond de creux (182) et **en ce que**, en particulier, l'axe de canal (226) coupe le fond de creux (182).

7. Attelage selon l'une quelconque des revendications précédentes, **caractérisé en ce que** le canal (226) traverse une paroi latérale (232) du creux.

8. Attelage selon l'une quelconque des revendications précédentes, **caractérisé en ce que** la sortie (224) du canal (222) traverse aussi bien une paroi latérale (232) du creux qu'un fond (182) du creux (162).

9. Attelage selon l'une quelconque des revendications précédentes, **caractérisé en ce que** le fond de creux (182) présente une distance par rapport au plan médian longitudinal (L) supérieure à un dixième d'un rayon (RK) de la boule d'attelage (16).

10. Attelage selon l'une quelconque des revendications précédentes, **caractérisé en ce que** le col de cygne (10) présente un premier tronçon (62) du col de cygne partant de l'épaulement de rotule (14) en direction de l'axe médian (52) de la boule d'attelage et **en ce que**, en particulier, le creux (162) est disposé dans le premier tronçon (62) du col de cygne.

11. Attelage selon la revendication 10, **caractérisé en ce que** le creux (162) part d'un contour latéral longitudinal (122) du premier tronçon (162) du col de cygne en direction du plan médian longitudinal (L) et pénètre dans le col de cygne (10).

12. Attelage selon l'une quelconque des revendications précédentes, **caractérisé en ce que** le col de cygne (10) présente un deuxième tronçon (64) adjacent au premier tronçon (62) du col de cygne et cintré par rapport à l'axe médian (52) de la boule d'attelage et **en ce que**, en particulier, le deuxième tronçon (64) de col de cygne présente un creux (164) adjacent au creux (162) dans le premier tronçon (62) de col de cygne.

13. Attelage selon l'une quelconque des revendications précédentes, **caractérisé en ce que** le col de cygne (10) présente un troisième tronçon (66) adjacent au deuxième tronçon (64) de col de cygne, portant une unité de contact (68), **en ce que**, en particulier, le troisième tronçon (66) de col de cygne présente un logement (72), aménagé dans celui-ci, destiné à l'unité de contact (92) et **en ce que**, en particulier, le deuxième creux (164) est dirigé vers l'unité de contact (68) dans le troisième tronçon (66) de col de cygne.

14. Attelage selon l'une quelconque des revendications précédentes, **caractérisé en ce que** le col de cygne (10) présente un quatrième tronçon (82) adjacent au troisième tronçon (66) de col de cygne et se transformant en un élément (54) de l'unité de palier (24) et **en ce que**, en particulier, le quatrième tronçon (82) de col de cygne présente un creux (172).

15. Attelage selon l'une quelconque des revendications précédentes, **caractérisé en ce que** l'unité de capteur (214) est un élément d'une unité de détection de l'angle de pliage (216), **en ce que**, en particulier, l'unité de détection de l'angle de pliage (216) présente une bague d'entraînement (202) positionnée de manière rotative sur la boule d'attelage (16) et **en ce que**, en particulier, l'entraîneur est en forme de bague d'entraînement (202) et est disposé et guidé, de manière rotative, dans une rainure annulaire (204) faisant concentriquement le tour sur un côté extérieur de la boule d'attelage (16) et, en particulier, par rapport à l'axe médian de la boule d'attelage.
